Europäisches Patentamt

European Patent Office

Office européen des brevets

(11) Veröffentlichungsnummer: **0 248 185 B1**

(19)

# EUROPÄISCHE PATENTSCHRIFT

(12)

(45) Veröffentlichungstag der Patentschrift: **17.06.92**

(21) Anmeldenummer: **87105777.4**

(22) Anmeldetag: **18.04.87**

(51) Int. Cl.5: **C11D 3/37**

Die Akte enthält technische Angaben, die nach
dem Eingang der Anmeldung eingereicht wurden
und die nicht in dieser Patentschrift enthalten sind.

(54) **Flüssige wässrige Reinigungsmittel für harte Oberflächen.**

(30) Priorität: **28.04.86 DE 3614336**

(43) Veröffentlichungstag der Anmeldung:
**09.12.87 Patentblatt 87/50**

(45) Bekanntmachung des Hinweises auf die
Patenterteilung:
**17.06.92 Patentblatt 92/25**

(84) Benannte Vertragsstaaten:
**AT BE CH DE FR GB IT LI LU NL SE**

(56) Entgegenhaltungen:
**FR-A- 2 315 905**
**GB-A- 2 104 091**
**US-A- 4 584 339**

(73) Patentinhaber: **Henkel Kommanditgesellschaft
auf Aktien
Postfach 1100 Henkelstrasse 67
W-4000 Düsseldorf-Holthausen(DE)**

(72) Erfinder: **Jeschke, Peter, Dr.
Macherscheider Strasse 137
W-4040 Neuss 1(DE)**
Erfinder: **Kiewert, Eva, Dr.
Am Langen Weiher 6
W-4000 Düsseldorf 13(DE)**
Erfinder: **Schieferstein, Ludwig, Dr.
Am Hang 15
W-4030 Ratigen 1(DE)**
Erfinder: **Schumann, Klaus, Dr.
Keplerstrasse 33
W-4006 Erkrath(DE)**
Erfinder: **Wisotzki, Klaus-Dieter, Dr.
Wahnenmühle 4
W-4006 Erkrath 2(DE)**

## Beschreibung

Für die Reinigung harter Oberflächen in Haushalt und Gewerbe sind Reinigungsmittel auf Basis von Tensiden mit oder ohne Zusatz von Gerüstsubstanzen gebräuchlich. Es ist bekannt, derartigen Reinigungsmitteln zur Steigerung des Reinigungsvermögens natürliche oder synthetische Polymere zuzusetzen. So werden in den deutschen Patentanmeldungen 28 40 463 und 28 40 464 der Einsatz hochmolekularer Polyethylenglykole und in der deutschen Patentanmeldung 29 13 049 Polyvinylalkohole, Polyvinylpyrrolidone, Celluloseether, Polysaccharide, Proteine und Polyacrylamide als Reinigungsverstärkerzusätze beschrieben.

Nach der britischen Patentschrift 1 073 947 verbessern u.a. Polyacrylamide das Schmutztragevermögen von flüssigen Reinigungsmitteln für harte und schwer zugängliche Oberflächen.

In der deutschen Patentanmeldung 22 20 540 werden Polymere aus Monovinyl-aromatischen Monomeren mit ungesättigten Dicarbonsäuren und in der europäischen Patentanmeldung 66 342 dieselbe Verbindungsklasse, jedoch in teilveresterter Form, zur Verbesserung des visuellen Rückstandbildes der gereinigten Oberflächen bzw. zur Vermeidung des Beschlagens von Glas durch Wasserdampf beschrieben.

Aus der britischen Patentanmeldung 2 104 091 sind schließlich flüssige Reinigungsmittel bekannt, die zusammen mit üblichen anionischen, nichtionischen, kationischen oder amphoteren Tensiden einen Zusatz an einer amphoteren Polymerverbindung, hergestellt durch Polymerisieren eines kationischen Vinylmonomeren mit einem anionischen Vinylmonomeren, enthalten. Dieser Zusatz, der gegenüber dem Tensid in untergeordneten Mengenanteilen eingesetzt wird, bewirkt eine Verbesserung der Waschkraft.

Alle diese bekannten flüssigen Reinigungsmittel können aber nicht verhindern, daß frisch gereinigtes Kunststoffmaterial aus der Luft wieder Staubteilchen anzieht und dadurch wie ungereinigt erscheinen kann.

Für die zunehmende Zahl von Kunststoff-Oberflächen im Haushalt würde es daher eine erhebliche Erleichterung der Reinigungsarbeit und -effizienz bedeuten, wenn die Oberflächen gleichzeitig mit der Reinigung antistatisch ausgerüstet werden würden. Ein weiterer Nutzen für den Verbraucher wäre dann gegeben, wenn er ein und dasselbe Reinigungsmittel für einen breiten Anwendungsbereich benutzen und damit optimale Effekte sowohl an hydrophoben Oberflächen (Antistatik-Effekte) als auch an hydrophilen Oberflächen (Antibeschlageffekte) erzielen könnte.

Aufgabe der Erfindung war es daher, Reinigungsmittel zur Verfügung zu stellen, die zur Reinigung aller feucht behandelbarer harter Oberflächen in Haushalt und Gewerbe geeignet sind und die gleichzeitig sowohl eine gute Reinigung als auch eine antistatische Ausrüstung von zur statischen Aufladung neigenden Oberflächen sowie Antibeschlageffekt auf Spiegeln bewirken, wobei auf den behandelten Oberflächen keine sichtbaren Rückstände in Form von Streifen, Flecken oder dergleichen zurückbleiben. Mit den nach dem Stand der Technik bekannten Polymeren und deren endgültigen Formulierungen ist es nicht möglich, alle diese genannten Forderungen mit einem einzigen Reinigungsmittel zu erfüllen.

Überraschenderweise ist es gelungen, die Aufgabe durch die Verwendung von ausgewählten amphoteren Co-Polymeren, die im Molekül sowohl anionischen als auch kationische Zentren enthalten und sich durch bestimmte Hydrophilierungseigenschaften auszeichnen, zusammen mit Tensiden in bestimmten kritischen Mengenverhältnissen zu lösen.

Es ist damit ein besonderes Merkmal der erfindungsgemäßen Reinigungsmittel, daß sie im Gegensatz zur Lehre der britischen Patentschrift 21 04 091 mengenmäßig weniger Tensid als Polymerverbindung, allenfalls gleiche Mengen von Tensid und Polymerverbindung aufweisen.

Die vorliegende Erfindung betrifft flüssige wäßrige Reinigungsmittel für harte Oberflächen, die wenigstens eine amphotere Polymerverbindung, erhalten durch Co-Polymerisation eines kationischen Vinylmonomeren mit einem anionischen Vinylmonomeren, in einer Menge von 0,01 bis 10 Gewichtsprozent, sowie ein anionisches, nichtionisches, kationisches oder amphoteres Tensid oder deren Gemische enthalten und dadurch gekennzeichnet sind, daß die amphoteren Polymerverbindungen mit anionischen und kationischen Zentren im Molekül aus solchen Polymerverbindungen ausgewählt sind, die mindestens 1 Mol eines stickstoffhaltigen Acrylsäurederivates, bezogen auf 1 Mol Acrylsäure, enthalten, und die in 0,1 %iger Lösung in Wasser von 16 °d eine irreversible Hydrophilierung von PVC mit Inkrementen der Benetzungsspannung von mindestens 3mN/m bewirken, und wobei die Tensidmenge so ausgewählt ist, daß das Gewichtsverhältnis von Polymer zu Tensid bei 20 : 1 bis 1 : 1, vorzugsweise bei 10 : 1 bis 1 : 1 liegt.

Bevorzugte erfindungsgemäße Mittel enthalten die amphotere Polymerverbindung in Mengen von 0,02 bis 5 Gewichtsprozent. Dabei liegt das Gewichtsverhältnis von Polymer : Tensid bei 10 : 1 bis 1 : 1.

Bei der Anwendung der erfindungsgemäßen Mittel auf den zu reinigenden harten Oberflächen wird nicht nur ein guter Antistatikeffekt, sondern ebenfalls ein guter Antibeschlagseffekt, verbunden mit gutem Rückstandsverhalten, beobachtet.

Es können praktisch alle für derartige Reinigungsmittel bisher schon übliche Tenside und Tensidgemische eingesetzt werden. Besonders bevorzugt sind nichtionische Tenside vom Typ der Aminoxide mit mindestens einem Alkylrest mit 10 bis 20 Kohlenstoffatomen. Typische Vertreter sind beispielsweise die Verbindungen N-Dodecyl-N,N-dimethylaminoxid, N-Tetradecyl-N,N-dihydroxyethylaminoxid und N-Hexadecyl-N,N-bis (2,3-dihydroxypropyl)-aminoxid.

Gute Effekte erreicht man auch mit anderen nichtionischen Tensiden, zum Beispiel mit Anlagerungsprodukten von 4 bis 40, vorzugsweise 4 bis 20 Mol Ethylenoxid oder Ethylenoxid und Propylenoxid an 1 Mol Fettalkohol, Alkandiol, Alkylphenol, Fettsäure, Fettamin, Fettsäureamid oder Alkansulfonamid. Besonders wichtig sind die Anlagerungsprodukte von 5 bis 16 Mol Ethylenoxid oder Ethylen- und Propylenoxid an Cocos- oder Talgfettalkohole, an Oleylalkohol oder an sekundäre Alkohole mit 8 bis 18, vorzugsweise 12 bis 18 C-Atomen, sowie an Mono- oder Dialkylphenole mit 6 bis 14 C-Atomen in den Alkylresten. Neben diesen wasserlöslichen Nonionics sind aber auch nicht bzw. nicht vollständig wasserlösliche Polyglykolether mit 1 bis 4 Ethylenglykoletherresten im Molekül von Interesse, insbesondere wenn sie zusammen mit wasserlöslichen nichtionischen oder anionischen Tensiden eingesetzt werden.

Weiterhin sind als nichtionische Tenside die wasserlöslichen, 20 bis 250 Ethylenglykolethergruppen und 10 bis 100 Propylenglykolethergruppen enthaltenden Anlagerungsprodukte von Ethylenoxid an Polypropylenoxid, Alkylendiaminpolypropylenglykol und Alkylpolypropylenglykole mit 1 bis 10 C-Atomen in der Alkylkette brauchbar, in denen die Polypropylenglykolkette als hydrophober Rest fungiert.

Auch anionische Tenside können, allein oder in Kombination mit nichtionischen Tensiden eingesetzt werden. Bevorzugt verwendet man Tensidkombinationen aus anionischen Tensiden aus der Gruppe der Sulfonat- und Sulfattenside und nichtionischen Tensiden vom Typ der ethoxylierten Alkanole, Alkenole und Alkylphenole.

Als anionische Tenside sind zum Beispiel Seifen aus natürlichen oder synthetischen Fettsäuren, gegebenenfalls auch aus Harz-oder Naphthensäuren brauchbar. Geeignete synthetische anionische Tenside sind solche vom Typ der Sulfonate und der synthetischen Carboxylate.

Als Tenside vom Sulfonattyp kommen Alkylbenzolsulfonate ($C_{9-15}$-Alkyl), Gemische aus Alken- und Hydroxyalkansulfonaten sowie Disulfonaten, wie man sie beispielsweise aus Monoolefinen mit end- oder innenständiger Doppelbindung durch Sulfonieren mit gasförmigen Schwefeltrioxid und anschließende alkalische oder saure Hydrolyse erhält, in Betracht. Weiter eignen sich Alkansulfonate, die aus Alkanen durch Sulfochlorierung oder Sulfoxydation und anschließende Hydrolyse bzw. Neutralisation bzw. durch Bisulfitaddition an Olefine erhältlich sind. Weitere brauchbare Tenside vom Sulfonattyp sind die Ester von alpha-Sulfofettsäuren, z.B. die alpha-Sulfonsäuren aus hydrierten Methyl- oder Ethylestern der Kokos-, Palmkern- oder Talgfettsäure.

Geeignete Tenside vom Sulfattyp sind die Schwefelsäuremonoester primärer Alkohole (z.B. aus Kokosfettalkoholen, Talgfettalkoholen oder Oleylalkohol) und diejenigen sekundärer Alkohole. Weiterhin geeignet sind sulfatierte Fettsäurealkanolamide, Fettsäuremonoglyceride oder Umsetzungsprodukte von 1 bis 4 Mol Ethylenoxid mit primären oder sekundären Fettalkoholen oder Alkylphenolen.

Ebenso geeignete anionische Tenside sind die Fettsäureester beziehungsweise -amide von Hydroxy- oder Aminocarbonsäuren beziehungsweise -sulfonsäuren, wie z.B. die Fettsäuresarcoside, -glykolate, -lactate, -tauride oder -isethionate.

Die anionischen Tenside können in Form ihrer Alkali-, Erdalkali-und Ammoniumsalze sowie als lösliche Salze organischer Basen, wie Mono-, Di- oder Triethanolamin vorliegen. Die Natriumsalze werden meist aus Kostengründen bevorzugt.

Die weiterhin einsetzbaren kationischen Tenside enthalten wenigstens eine hydrophobe und wenigstens eine basische, gegebenenfalls als Salz vorliegende wasserlöslich machende Gruppe. Bei der hydrophoben Gruppe handelt es sich um eine aliphatische oder cycloaliphatische Kohlenwasserstoffgruppe mit vorzugsweise 10 bis 22 C-Atomen oder um eine alkyl- beziehungsweise cycloalkylaromatische Gruppe mit vorzugsweise 8 bis 16 aliphatischen C-Atomen. Als basische Gruppen kommen in erster Linie basische Stickstoffatome in Frage, die auch mehrfach in einem Tensidmolekül vorhanden sein können; bevorzugt handelt es sich um quartäre Ammoniumverbindungen wie beispielsweise N-Dodecyl-N,N,N-trimethylammoniummethosulfat, N-Hexadecyl- beziehungsweise N-Octadecyl-N,N,N-trimethylammoniumchlorid, N,N-Dicocosalkyl-N,N-dimethylammoniumchlorid, N-Dodecyl-N,N-dimethyl-N-benzylammoniumbromid, das Umsetzungsprodukt von 1 Mol Talgalkylamin mit 10 Mol Ethylenoxid, N-Dodecyl-N,N′,N′-trimethyl-1,3-diaminopropan, N-Hexadecylpyridiniumchlorid. Selbstverständlich ist bei Einsatz kationischer Tenside in üblicher Weise deren Verträglichkeit mit weiteren Rezepturbestandteilen zu überprüfen.

Bei den erfindungsgemäß eingesetzten amphoteren Co-Polymeren handelt es sich um Co-Polymere mit anionischen und kationischen Zentren im Molekül, die gemäß der britischen Patentanmeldung 2 104 091 aus jeweils zwei oder drei der folgenden Monomeren:

| | |
|---|---|
| AS | Acrylsäure bzw. deren Salze |
| DMAEM | Dimethylaminoethylmethacrylat |
| DMANA | Dimethylaminoneopentylacrylat |
| DMAPMA | Dimethylaminopropylmethacrylamid |
| EA | Ethylacrylat |
| MAPTA | C Methacrylamidopropyltrimethylammoniumchlorid |
| MAS | Methacrylsäure bzw. deren Salze |
| MMA | Methylmethacrylat |

hergestellt wurden und mindestens 1 Mol eines stickstoffhaltigen Acrylsäurederivats, bezogen auf 1 Mol Acrylsäure, enthalten. Unter Acrylsäure werden hier auch die stickstofffreien Acrylsäurederivate wie Ethylacrylat, Methacrylsäure und Methylmethacrylat verstanden. Bei den Salzen handelte es sich um die Alkali-, die Ammonium und/oder die Alkanolaminsalze.

Die Messung der irreversiblen Hydrophilierung von Kunststoffen erfolgte mit Hilfe von Benetzungsspannungsmessungen wie sie in Colloid & Polymer Science, 264, (1986), 56-64 beschrieben werden. Die Polymeren wurden dabei in 0,01 %iger Lösung in 16° d-hartem Wasser auf PVC geprüft. Die Oberflächenspannung $\gamma_L$ (surface tension) in mN/m (früher dyn/cm, siehe DIN 1301) ist nach der Gleichung

$$j = \gamma_L \cdot \cos \Theta \; ( = \frac{F}{P} )$$

die obere Grenze der Benetzungsspannung j (wetting tension) für $\Theta \rightarrow O$. Numerisch können ältere Werte ohne cnderung übernommen werden z.B. für reines Wasser bei 25 °C $\gamma_L = 72$ m N/m = 72 dyn/cm.

$\Theta$ in Grad ist der in der Flüssigkeit gemessene Gleichgewichtsrandwinkel zwischen einem ebenen festen Meßkörper und der Tangente an der Oberfläche des Tropfens im Benetzungspunkt.

Bei der meßtechnischen Erfassung der Benetzungsspannung j gegen Wasser, wird die Kraft (F) gemessen, mit der ein Meßkörper vom Umfang (P) (z.B. PVC-Folie) in Wasser hineingezogen oder herausgestoßen wird. Der Meßwert ist also ein Maß für die Benetzungsfähigkeit (Benetzungsspannung j = $\frac{F}{P}$ ) eines Meßkörpers mit Wasser.

Die effektiv irreversible Adsorption von amphoterischen Polymeren an einem Meßkörper verändert, je nach der Hydrophilie oder Hydrophobie des Molekülbaus, diese Kraft mehr oder weniger.

Bei einem Hydrophilierungseffekt ist die Kraft, mit der der Meßkörper ins Wasser gezogen wird, größer als im Ausgangszustand. Daraus resultieren also positive Inkremente der Benetzungsspannung

$(+ \Delta j)$. (Bei einem Hydrophobierungseffekt wäre die Kraft, mit der der Meßkörper ins Wasser gezogen wird, kleiner als im Ausgangszustand. Daraus würden negative Inkremente der Benetzungsspannung $(- \Delta j)$ resultieren). (Vergleiche auch B. Miller and R.A. Young in Textile Res. J. 45 (1975) 359 - 365).

Der Einsatz wasserlöslicher oder lösungsvermittelnder Lösungsmittel ist nicht essentiell für die erfindungsgemäß erzielten Effekte, jedoch kann deren Gegenwart das Abdunstverhalten von Reinigungsmittelresten auf den behandelten Oberflächen positiv beeinflussen. Als Beispiele kommen lineare, verzweigte und cycloaliphatische $C_2$-$C_{12}$-Alkohole sowie Ether aus gleich- oder verschiedenartigen mehrwertigen Alkoholen oder die Teilether aus mehrwertigen Alkoholen in Betracht. Hierzu gehören beispielsweise Di- oder Triethylenglykolpolyglycerine sowie die Teilether aus Ethylenglykol, Propylenglykol Butylenglykol oder Glycerin mit aliphatischen, 1 bis 4 Kohlenstoffatome im Molekül enthaltenden einwertigen Alkoholen.

Als wasserlösliche oder mit Wasser emulgierbare organische Lösungsmittel kommen auch Ketone, wie Aceton, Methylethylketon sowie aliphatische, cycloaliphatische, aromatische und chlorierte Kohlenwasserstoffe, ferner die Terpene in Betracht.

Außerdem kann man an sich bekannte Lösungsvermittler einarbeiten, wozu außer den wasserlöslichen organischen Lösungsmitteln wie insbesondere niedermolekularen aliphatischen Alkoholen mit 1 bis 4 Kohlenstoffatomen auch die sogenannten hydrotropen Stoffe vom Typ der niederen Alkylarylsulfonate, beispielsweise Toluol-, Xylol- oder Cumosulfonat gehören. Sie können auch in Form ihrer Natrium- und/oder Kalium- und/oder Alkylaminosalze vorliegen.

Die Mengen der wasserlöslichen oder lösungsvermittelnden Lösungsmittel liegen bei 0 bis 15, vorzugsweise bei 0 bis 10 Gewichtsprozent, bezogen auf das gesamte Mittel.

Gegebenenfalls können den erfindungsgemäßen Reinigungsmitteln in Mengen von 0 bis 3, vorzugsweise von 0 bis 2 Gewichtsprozent, bezogen auf das gesamte Mittel, auch noch bekannte Gerüstsubstanzen zugesetzt werden, insbesondere anorganische oder organische Komplexbildner, die bevorzugt in Form ihrer Alkali- oder Aminsalze, insbesondere der Kaliumsalze vorliegen. Zu den Gerüstsubstanzen zählen hier auch die Alkalihydroxide. Als organische komplexbildende Gerüstsubstanzen eignen sich besonders die alkalisch reagierenden Polyphosphate, insbesondere die Tripolyphosphate sowie die Pyrophosphate. Sie können ganz oder teilweise durch organische Komplexbildner ersetzt werden. Weitere erfindungsgemäß brauchbare anorganische Gerüstsubstanzen sind beispielsweise Dicarbonate, Carbonate, Borate, Silikate oder Orthophosphate der Alkalien.

Zu den organischen Komplexbildnern vom Typ der Aminopolycarbonsäuren gehören unter anderem die Nitrilotriessigsäure, Ethylen-diamintetraessigsäure. N-Hydroxyethyl-ethylen-diamintriessigsäure und Polyalkylen-polyamin-N-polycarbonsäuren sowie Di- und Polyphosphonsäuren.

In jüngerer Zeit sind in der Literatur verschiedenste, meist N-oder P-freie Polycarbonsäuren als Gerüstsubstanzen vorgeschlagen worden, wobei es sich vielfach, wenn auch nicht ausschließlich, um Carboxylgruppen enthaltende Polymerisate handelt. Eine große Zahl dieser Polycarbonsäuren besitzen ein Komplexbildungsvermögen für Calcium. Hierzu gehören zum Beispiel Citronensäure, Weinsäure, Benzolhexacarbonsäure, Tetrahydrofurantetracarbonsäure, Gluconsäure usw. Da die beanspruchten Mittel vorzugsweise neutral bis schwach alkalisch eingestellt werden sollten, kann zur Regulierung des pH-Wertes ein Zusatz saurer oder alkalischer Komponenten erforderlich sein.

Als saure Substanzen eignen sich übliche anorganische oder organische Säuren oder saure Salze, wie beispielsweise Salzsäure, Schwefelsäure, Bisulfate der Alkalien, Aminosulfonsäure, Phosphorsäure oder andere Säuren des Phosphors, insbesondere die anhydrischen Säuren des Phosphors bzw. deren saure Salze oder deren sauer reagierende feste Verbindungen mit Harnstoff oder anderen niederen Carbonsäureamiden, Teilamide der Phosphorsäuren oder der anhydrischen Phosphorsäure, Citronensäure, Weinsäure, Milchsäure und dergleichen. Sofern der Gehalt an alkalischen Gerüstsubstanzen nicht zur Regulierung des pH-Wertes ausreicht, können auch noch alkalisch wirkende organische oder anorganische Verbindungen wie Alkanolamine, nämlich Mono-, Di-oder Triethanolamin oder Ammoniak zugesetzt werden.

Weitere in Reinigungsmitteln übliche Additive wie zum Beispiel Viskositätsregler, antimikrobielle Wirkstoffe, Farb- und Duftstoffe können ebenfalls in den beanspruchten Reinigungsmitteln zugegen sein, sofern deren Verträglichkeit mit den übrigen Rezepturbestandteilen sichergestellt ist.

**Beispiele**

1. Herstellung der amphoteren Polymeren:

a) Herstellvorschrift für ein Copolymeres aus DMAEM:AS = 5 : 1

Zuerst wurden in einem 2-l-Kolben mit aufgesetztem Dosiergefäß unter Außenkühlung 306 g Wasser, 26,8 g (0,17 Mol) Dimethylaminoethylmethacrylat und 2,46 g (0,034 Mol) Acrylsäure eingewogen. Durch Zugabe von ca. 21 g 30 %iger Schwefelsäure wurde ein pH-Wert von ca. 6 eingestellt. Die Innentemperatur wurde unter 25 °C gehalten.

In das Dosiergerät wurde eine wie vorstehend hergestellte Lösung aus 346 g Wasser, 241,2 g (1,54 Mol) Dimethylaminoethylmethacrylat, 22,5 g (0,31 Mol) Acrylsäure und ca. 200 g 30%iger Schwefelsäure gefüllt.
Die Vorlage im Kolben wurde nun auf eine Temperatur von 80 °C gebracht und die Polymerisation durch Zugabe einer Lösung von 2,6 g Ammoniumperoxydisulfat in 20 g Wasser gestartet.
Darauf wurde die Lösung aus dem Dosiergefäß innerhalb einer Stunde zudosiert. Die Innentemperatur wurde durch Außenkühlung zwischen 78 und 83 °C gehalten. Nach beendetem Zulauf wurde eine Lösung von 1,3 g Ammoniumperoxydisulfat in 10 g Wasser zugesetzt und der Ansatz ca.eine Stunde bei 80 °C nachgerührt.
Nach Erkalten erhielt man eine klare, gelbe, mäßig viskose Polymerlösung.
Bei geringerer Konzentration kann die Reaktion auch einstufig geführt werden, weil dann die Reaktionsexothermie geringer ist. Diese Vorgehensweise wird nachfolgend beschrieben.

b) Herstellvorschrift für ein Copolymeres aus DMAEM:AS:MMA = 3 : 1 : 1

In einen 2-l-Kolben wurden 95,4 g Dimethylaminoethylmethacrylat (0,61 Mol), 60,8 g Methylmethacrylat (0,61 Mol), 0,7g Azodi(isobuttersäurenitril) und 159 g Isopropanol eingewogen. Unter Rühren wurden 43,8 g Acrylsäure (0,61 Mol) in 635 g Wasser zugesetzt. Durch äußere Kühlung wurde dabei eine Erwärmung über 25 °C vermieden. Die Mischung wurde dann vorsichtig durch Zufügen von ca. 5 g 30 %iger Schwefelsäure auf einen pH-Wert von ca. 6,0 gebracht und unter einer Stickstoffatmosphäre 2,5 Stunden bei 65 bis 80 °C gerührt. Nach Erkalten erhielt man eine farblose, klare, leicht viskose Polymerlösung.

Die Herstellung der anderen Substanzen erfolgte analog und für den Fachmann jeweils leicht durchführbar.

2. Untersuchungsmethoden

Die Eigenschaften der beanspruchten Mittel wurden nach folgenden Testverfahren geprüft:

a) Antistatik-Effekte

a1) Meßmethode

15 cm × 15 cm große Platten aus PVC, PE und Acrylglas wurden mit den Prüfprodukten behandelt, im Normklima (20 °C / 65 % rel. Feuchte) akklimatisiert und mit der Ringelektrode nach DIN 54 345 Teil I der elektrische Oberflächenwiderstand gemessen. Je Prüfprodukt kamen je 3 Platten desselben Materials zum Einsatz. Als Vergleich dienten gleichartige Platten, die entweder nur mit Wasser oder mit den jeweils empfohlenen Gebrauchslösungen handelsüblicher, polymerhaltiger Reinigungsmittel behandelt worden waren.

Die ermittelten Widerstandsgrößen (in Ohm) der mit den erfindungsgemäßen Reinigungsmitteln behandelten Platten lagen um mehrere Zehnerpotenzen niedriger als die Blindwerte und erheblich günstiger als die Vergleichswerte mit dem Reinigungsmittel nach dem Stande der Technik.

a2) Qualitativer Test

Als schnell durchzuführender Vortest wurde die Neigung, Rußpartikeln anzuziehen, überprüft. Der Ruß wurde durch Verbrennen von Zellstoff hergestellt. Die unter a1) beschriebenen, mit den Reinigungsmitteln behandelten und getrockneten Platten wurden mit einem Wolltuch abgerieben und im Abstand von 5 cm über den Ruß gehalten. Während die mit dem Reinigungsmittel nach dem Stand der Technik behandelten Platten den Ruß anzogen, blieben die mit den erfindungsgemäßen Produkten behandelten Platten sauber.

b) Antibeschlag-Effekte

30 cm × 40 cm große Spiegel wurden mit den erfindungsgemäßen und im Vergleich dazu mit dem Reinigungsmittel nach dem Stand der Technik behandelt und in einen Haushaltskühlschrank gelegt. Nach 1/2 Stunde wurden die Spiegel visuell beurteilt.

Während die erfindungsgemäßen Mittel das Beschlagen der Spiegel verhinderten, waren die mit dem Vergleichsmittel behandelten Spiegel beschlagen.

c) Rückstandsverhalten

Flächen aus Spiegelglas, glasierten Kacheln, PVC, PE, Acrylglas und Resopal wurden mit den erfindungsgemäßen Mitteln und im Vergleich dazu mit dem Reinigungsmittel nach dem Stande der Technik nach jeweiliger Gebrauchsempfehlung behandelt.

Nach dem Trocknen der Flächen wurde das homogene Aussehen visuell beurteilt. Die erfindungsgemäßen Mittel zeigten in allen Fällen ein deutlich günstigeres Rückstandsbild als das Vergleichsprodukt.

d) Reinigungswirkung

Zur Prüfung der Reinigungswirkung wurde das zu prüfende Reinigungsmittel auf eine künstlich angeschmutzte PVC-Kunststoffoberfläche gegeben. Als künstliche Anschmutzung wurde ein Gemisch aus Ruß, Maschinenöl, Triglycerid gesättigter Fettsäuren und niedersiedendem aliphatischen Kohlenwasserstoff verwendet. Die Testfläche von 26 × 28 cm wurde mit Hilfe eines Flächenstreichers gleichmäßig mit 2 g der künstlichen Anschmutzung beschichtet.

Ein Kunststoffschwamm wurde jeweils mit 12 ml der zu prüfenden Reinigungsmittellösung getränkt und maschinell auf der Testfläche bewegt. Nach 6 Wischbewegungen wurde die gereinigte Testfläche unter fließendes Wasser gehalten und der lose sitzende Schmutz entfernt. Die Reinigungswirkung, d.h., der Weißgrad der so gereinigten Kunststoffoberfläche wurde mit einem photoelektrischen Farbmeßgerät LF 90 (Dr. B. Lange) gemessen. Als Weiß-Standard diente die saubere weiße Kunststoffoberfläche. Da bei der Messung der sauberen Oberfläche auf 100 % eingestellt und die angeschmutzte Fläche mit 0 angezeigt wurde, waren die abgelesenen Werte bei den gereinigten Kunststoff-Flächen mit dem Prozentgehalt Reinigungsvermögen (% RV) gleichzusetzen. (Qualitätsnormen des Industrieverbandes Putz- und Pflegemittel (IPP), veröffentlicht in Seifen, Öle, Fette, Wachse, 108, Nr. 16, S. 527 (1982))/.

e) Zusammensetzung eines Reinigungsmittels nach dem Stande der Technik

Wäßrige Lösung aus 7,0 Gewichtsprozent eines gerad-kettigen primären $C_9$-$C_{11}$-Alkanols, umgesetzt mit 5 Mol Ethylenoxid, 2 Gewichtsprozent Natriumlaurylethersulfat, 1 Gewichtsprozent eines Partialesters aus Styrol-Maleinsäureanhydrid-Polymeren und 0,45 Gewichtsprozent Hydroxyethylcellulose.

Die folgenden Beispiele wurden durch einfaches Mischen der genannten Komponenten hergestellt. Alle Prozentangaben beziehen sich auf Gewichtsprozent.

Beispiel 1

| | |
|---|---|
| 0,1 % | Kokosalkyldimethylaminoxid |
| 0,15 % | Amphopolymer DMAEM / AS (Molverhältnis 10 : 1) |
| 4 % | Ethanol |
| 2 % | Isopropanol |
| 1 % | Propylenglykolbutylether |
| 0,1 % | Duftstoffe |
| ad 100 % | vollentsalztes Wasser |

Das Reinigungsmittel zeigte einen sehr guten Antibeschlageffekt auf Spiegelglas. Es rüstete PVC und PE-Oberflächen antistatisch aus, wobei die behandelten Oberflächen keine sichtbaren Rückstände aufwiesen. Das Reinigungsvermögen nach IPP-Norm ist erheblich besser als dasjenige einer Gebrauchslösung eines handelsüblichen Reinigungsmittels für harte Oberflächen auf Basis eines nichtionischen und eines anionischen Tensids und eines partiell veresterten Styrol-Maleinsäureanhydrid-Copolymers gemäß EP-A-66342.

Beispiele 2 - 10

In der Grundrezeptur des Beispiels 1 wurde das amphotere Polymere wie folgt variiert:

DMAEM / AS
Molverhältnis 1 : 1
DMAEM / AS
Molverhältnis 2 : 1
DMAEM / AS
Molverhältnis 5 : 1
DMAEM / MAS
Molverhältnis 2 : 1
DMAEM / MAS
Molverhältnis 5 : 1
DMAEM / AS /MMA
Molverhältnis 1 : 1 : 1
DMAEM / AS /MMA
Molverhältnis 3 : 1 : 1
DMAEM / AS /MMA
Molverhältnis 5 : 1 : 1
DMAPMA/ AS
Molverhältnis 2 : 1

In allen Fällen resultierten Reinigungsmittel, die sich über handelsübliche Sprühpumpen versprühen ließen und bei der Prüfung von Antibeschlageffekt, Antistatic-Effekt, Rückstandsverhalten und Reinigungsvermögen ähnlich gute Ergebnisse lieferten wie Beispiel I.

Beispiele 11 und 12

| 0,05 % | sek. $C_{11}$-$C_{18}$-Alkansulfonat |
| 0,1 % | Fettalkohol + 5EO + 4PO (Kokosbasis) |
| 0,04 % | EDTA |
| 7 % | Ethanol |
| 1 % | Isopropanol |
| 0,01 % | Pineöl |
| 0,15 % | Polymer DMAEM / AS |
| ad 100 % | vollentsalztes Wasser |

Das Molverhältnis der Monomeren des Polymers aus Beispiel 11 betrug 3 : 1 und lag im Fall des Beispiels 12 bei 5 : 1.

Beide Reiniger zeigten auf PVC eine irreversible Hydrophilierung, die zu guten Antistatik-Wirkungen und hohen Reinigungseffekten führten. Das Rückstandsverhalten auf Glas und Kunststoffoberflächen war sehr gut.

**Patentansprüche**

1. Flüssige wäßrige Reinigungsmittel für harte Oberflächen, die wenigstens eine amphotere Polymerverbindung, erhalten durch Co-Polymerisation eines kationischen Vinylmonomeren mit einem anionischen Vinylmonomeren, in einer Menge von 0,01 bis 10 Gewichtsprozent, sowie ein anionisches, nichtionisches, kationisches oder amphoteres Tensid oder deren Gemische enthalten, dadurch gekennzeichnet, daß die amphoteren Polymerverbindungen mit anionischen und kationischen Zentren im Molekül aus solchen Polymerverbindungen ausgewählt sind, die mindestens 1 Mol eines stickstoffhaltigen Acrylsäurederivats, bezogen auf 1 Mol Acrylsäure, enthalten und die in 0,1 %iger Lösung in Wasser von 16 ° d eine irreversible Hydrophilierung von PVC mit Inkrementen der Benetzungsspannung von mindestens 3mN/m bewirken, und wobei die Tensidmenge so ausgewählt ist, daß das Gewichtsverhältnis von Polymer zu Tensid bei 20 : 1 bis 1 : 1 liegt.

2. Mittel nach Anspruch 1, dadurch gekennzeichnet, daß sie 0,02 bis 5 Gewichtsprozent der amphoteren Polymerverbindung enthalten.

3. Mittel nach den Ansprüchen 1 und 2, dadurch gekennzeichnet, daß das Gewichtsverhältnis von Polymer : Tensid bei 10 : 1 bis 1 : 1 liegt.

**Claims**

1. Liquid aqueous cleaning preparations for hard surfaces containing at least one amphoteric polymer compound obtained by copolymerization of a cationic vinyl monomer with an anionic vinyl monomer in a quantity of from 0.01 to 10% by weight and an anionic, nonionic, cationic or amphoteric surfactant or mixtures thereof, characterized in that the amphoteric polymer compounds containing anionic and cationic centres in the molecule are selected from polymer compounds which contain at least 1 mol of a nitrogen-containing acrylic acid derivative, based on 1 mol acrylic acid, and which, in 0.1% solution in water having a hardness of 16° d, produce irreversible hydrophilicization of PVC with increments in the wetting tension of at least 3 mN/m, the quantity of surfactant being selected so that the ratio by weight of polymer to surfactant is from 20:1 to 1:1.

2. Preparations as claimed in claim 1, characterized in that they contain from 0.02 to 5% by weight of the amphoteric polymer compound.

**3.** Preparations as claimed in claims 1 and 2, characterized in that the ratio by weight of polymer to surfactant is from 10:1 to 1:1.

**Revendications**

**1.** Agents nettoyants aqueux liquides pour les surfaces dures, qui renferment au moins un composé polymère amphotère obtenu par copolymérisation d'un monomère vinylique cationique avec un monomère vinylique anionique, dans une proportion de 0,01 à 10 pour cent en poids, ainsi qu'un tensioactif anionique, non ionique, cationique ou amphotère ou des mélanges de ceux-ci, caractérisés en ce que les composés polymères amphotères dont la molécule comporte des centres anioniques et cationiques sont sélectionnés parmi de tels composés polymères, qui renferment au moins 1 mole d'un dérivé azoté de l'acide acrylique pour 1 mole d'acide acrylique, et qui provoquent en solution à 0,1 % dans de l'eau de 16 °d une hydrophilisation irréversible du PVC avec des incréments de la tension de mouillage de 3 mN/m au moins, la proportion de tensioactif étant choisie de manière que le polymère et le tensioactif soient entre eux dans un rapport pondéral compris dans l'intervalle de 20:1 à 1:1.

**2.** Agents selon la revendication 1, caractérisés en ce qu'ils renferment 0,02 à 5 pour cent en poids du composé polymère amphotère.

**3.** Agents selon les revendications 1 et 2, caractérisés en ce que le polymère et le tensioactif sont entre eux dans un rapport pondéral compris dans l'intervalle de 10:1 à 1:1.